# EUROPÄISCHE PATENTSCHRIFT

(11) **EP 0 432 461 B1**
(45) Veröffentlichungstag und Bekanntmachung des Hinweises auf die Patenterteilung: **18.11.1993**
(21) Anmeldenummer: 90121482.5
(22) Anmeldetag: 09.11.1990
(51) Int. Cl.: B63H 21/30, B60K 5/12

(54) **Vorrichtung zur schwingungsisolierten Lagerung von Verbrennungsmotoren**
Arrangement for the oscillation-insulated support of combustion engines
Disposition pour le support isolé aux oscillations des moteurs à combustion

(30) Priorität: 16.11.1989 DE 3938141
(43) Veröffentlichungstag der Anmeldung: 19.06.1991
(73) Patentinhaber: Krupp MaK Maschinenbau GmbH, 24159 Kiel (DE)
(72) Erfinder: Kroos, Ernst-Günther, W-2300 Kiel 17 (DE)
(74) Vertreter: Hansmann, Dierk, Dipl.-Ing.

(56) Entgegenhaltungen:
- EP-A- 0 075 807
- DE-C- 852 050
- FR-A- 2 328 893
- GB-A- 2 005 207
- US-A- 2 520 757

## Beschreibung

Die Erfindung bezieht sich auf eine Vorrichtung zur schwingungsisolierten Lagerung von Verbrennungsmotoren nach dem Oberbegriff des Anspruchs 1.

Aus der FR-A-2 328 893 ist eine Vorrichtung zur schwingungsisolierten Lagerung von Verbrennungsmotoren für Fahrzeuge bekannt, bei der zwischen dem Motor und seinem Abstützgurt elastische Lagerelemente angeordnet sind. Mit diesem Lagerelement arbeitet eine Anschlageinrichtung zusammen, die vertikale und horizontale Bewegungen begrenzt, wozu feststehende Anschläge korrespondierend zu Halteelementen angeordnet sind.

Aufgabe der Erfindung ist es, eine verbesserte elastische Lagerung für Motoren zu schaffen, die die durch den Seegang verursachten Motorbewegungen in allen Richtungen begrenzt.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß durch die Anordnung des elastischen Lagerelementes direkt unterhalb der Motorfüße und der Verbindung mit einer Anschlageinrichtung zur Begrenzung von Motorbewegungen bei Seegang, der weich gelagerte Motor sicher auf seinem Fundament gehalten wird. Die am Motorfuß befestigte Anschlageinrichtung, welche Halteelemente und mit diesen korrespondierende feste Anschläge umfaßt, kann Verlagerungen des Motors bei jedem Seegang so begrenzen, daß dieser sicher auf seinem Fundament steht und angeschlossene Rohrleitungen und Kupplungen nicht beschädigt werden. Die Bewegungsbegrenzung des Motors ist so ausgelegt, daß bei üblichem Seegang die Dämmwirkung des elastischen Lagers nicht beeinträchtigt wird und die Bewegungsbegrenzung erst bei größeren Motorbewegungen wirkt.

Die Anschlageinrichtung ist derart aufgebaut, daß vertikale Schwingbewegungen durch die Lage des aus einer Hülse bestehenden Halteelements in der sie umgebenden feststehenden Anschlagbuchse auch bei Schiffsrollbewegungen nicht wesentlich behindert wird. Nur bei extremen Schiffsrollwinkeln könnte die vertikale Bewegung des Halteelements durch Reibung behindert werden.

Die vertikalen und horizontalen Bewegungsabstände zwischen den beiden Halteelementen und der Anschläge können eingestellt werden. So wird der vertikale Bewegungsabstand durch eine Anschlagscheibe auf einem Stehbolzen und der horizontale Bewegungsabstand durch den Innendurchmesser einer Buchse definiert.

Die Anschlageinrichtung kann auch nachträglich zum Lager angebaut werden, indem sie in einfacher Weise mit dem Motorfuß über die Fundamentschraube verbunden wird.

Zur Anpassung des Lagerelementes in der Höhe können unter der unteren Lagerplatte Paßstücke aus Stahl, Kunstharz oder dergleichen angeordnet werden.

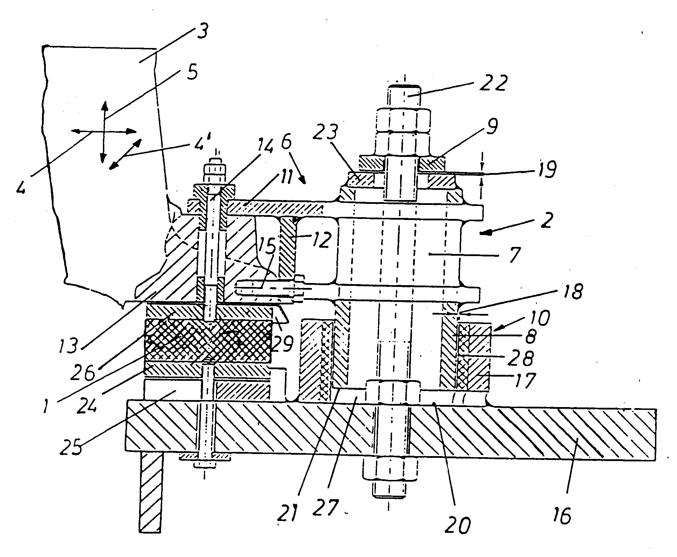

Ein Ausführungsbeispiel der Erfindung ist in der Zeichnung dargestellt und zeigt eine elastische Lagerung mit einer Anschlageinrichtung im Schnitt.

Die Vorrichtung zur elastischen Lagerung eines Motors umfaßt im wesentlichen ein elastisches Lager 1 und eine Anschlageinrichtung 2, die so mit dem Lager 1 gekoppelt ist, daß eine Schwingbewegung des Motors bei gleichzeitiger Begrenzung der seegangsbedingten Verschiebung in horizontaler Richtung 4 und 4 sowie in vertikaler Richtung 5 weitestgehend unbeeinflußt bleibt.

Hierzu besteht die Anschlageinrichtung 2 aus mit einem Gestell 6 verbundenen Halteelementen 7 und 8, die mit Anschlägen 9,10 und 20 korrespondieren.

Halteelemente 7 und 8 bestehen z.B. aus vertikal übereinander angeordneten und miteinander verbundenen zylindrischen Hülsen, welche über Schenkel 11,12 des Gestells 6 am Motorfuß 13 über Schrauben 14,15 verbunden sind. Die Halteelemente können aber auch eine andere Form aufweisen. Die Halteelemente 7 und 8 sind parallel liegend zum elastischen Lagerelement 1 angeordnet, so daß normale Motorschwingungen unbehindert von den Elementen 7 und 8 sind.

Das eine der Grundplatte 16 benachbart angeordnete erste Halteelement 8 ist vertikal begrenzt bewegbar in einer das Anschlagelement 10 bildenden Buchse 17 angeordnet. Zwischen dieser Buchse 17 und dem Element 10 ist ein horizontaler Bewegungsabstand 18 für die horizontale Bewegung in Pfeilrichtung 4 und 4′ vorgesehen, der auslegbar ist.

Das weitere, oberhalb des ersten Halteelements 8 angeordnete zweite Halteelement 7 ist in seiner vertikalen Hochbewegung in Pfeilrichtung 5 über die Anschlagscheibe 9, die im Abstand 19 angeordnet ist, begrenzt. Die Abwärtsbewegung der Anschlageinrichtung 2 kann dagegen über die Grundplatte 16, die als Anschlag 20 wirkt, begrenzt werden, auf der dann das erste Halteelement 8 mit seiner Stirnfläche 21 anschlägt.

Die Anschlagscheibe 9 ist endseitig eines mit der Grundplatte 16 verbundenen Stehbolzens 22 befestigt, der die Halteelemente 7 und 8 zentrisch durchdringt. Der Scheibe 9 gegenüberstehend ist ein mit der Hülse 7 verschweißter Deckel 23.

Zur Dämpfung von Geräuschen können die Anschläge 9,10 und 20 mit einer gummielastischen Schicht 28 versehen sein, wie sie an der Buchse 17 näher dargestellt ist.

Zur Anpassung bzw. zum individuellen Höhenausgleich des Lagerelementes 1 kann unterhalb der unteren Lagerplatte 24 ein Paßstück 25 aus Metall, Kunstharz oder dergleichen angeordnet werden.

Zur Vermeidung von Beschädigungen durch abtropfendes Öl an dem Lagerelement sind mit der oberen Lagerplatte 26 Ölabweisbleche 29 verbunden.

Durch die seitlich des Motors angeordnete Anschlageinrichtung 2 werden die Motorbewegungen infolge starken Seegangs sowohl in horizontaler als auch in vertikaler Richtung begrenzt. Schiffsrollbewegungen bis zu 45° können so aufgefangen werden, ohne daß die flexiblen Verbindungen beeinträchtigt werden. Bei üblichem Seegang hat die Anschlageinrichtung 2 keinerlei Einfluß auf die elastische Lagerung 1, was erst bei großen Roll- und Stampfbewegungen eintritt.

## Patentansprüche

1. Vorrichtung zur schwingungsisolierten Lagerung von Verbrennungsmotoren, insbesondere auf Schiffen, über zwischen dem Motor und seinem Abstützort angeordnete elastische Lagerelemente (1) mit einer Anschlageinrichtung (2) für vertikale und horizontale Bewegungen (4,4',5), die zwischen feststehenden Anschlägen (9,10,20) mit einem definierten Bewegungsabstand (18,19,27) angeordnete Halteelemente (7,8) umfaßt, wobei die Anschlageinrichtung (2) unabhängig vom elastischen Lagerelement (1) wirkend mit diesem verbunden ist, und die Halteelemente (7,8) über ein Gestell (6) an einem Motorfuß (13) befestigt und zwischen den Anschlägen (9,10,20) mit dem elastischen Lagerelement (1) bewegbar gehalten sind, dadurch gekennzeichnet, daß das Halteelement zwei Teile (7,8) umfaßt, wobei das zweite Teil (7) in der Ebene des Motorfußes (13) liegt und einen den Motorfuß (13) übergreifenden und in einer horizontalen Ebene ausgerichteten Befestigungsschenkel (11) sowie einen vertikalen Befestigungsschenkel (12) umfaßt.

2. Vorrichtung nach Anspruch 1, dadurch gekennzeichnet, daß die Halteelemente (7,8) zwei miteinander verbundene zylindrische Hülsen als durchgehendes Rohr umfassen, welche vertikal übereinander stehend und in einer parallelen Anordnung zum elastischen Lagerelement (1) gehalten sind.

3. Vorrichtung nach einem oder mehreren der vorhergehenden Ansprüche, dadurch gekennzeichnet, daß das erste Halteelement (8) mit einem radialen Bewegungsabstand (18) in einer den Anschlag (10) bildenden feststehenden Buchse (17) axial bewegbar angeordnet ist.

4. Vorrichtung nach Anspruch 3, dadurch gekennzeichnet, daß die Buchse (17) an ihrer dem Halteelement (8) zugerichteten Innenfläche eine elastische Schicht (28) aufweist.

5. Vorrichtung nach einem oder mehreren der vorhergehenden Ansprüche, dadurch gekennzeichnet, daß das zweite Halteelement (7) mit seiner Stirnfläche einer feststehenden Anschlagscheibe (9) gegenübersteht, die an einem mit der Grundplatte (16) verbundenen und die beiden zylindrischen Hülsen durchdringenden Stehbolzen (22) befestigt ist.

6. Vorrichtung nach einem oder mehreren der vorhergehenden Ansprüche, dadurch gekennzeichnet, daß das erste Halteelement (8) mit einem axialen Abstand zur Grundplatte (16) gehalten ist, die einen Anschlag (20) bildet und einer Stirnfläche (21) des Halteelementes (8) gegenübersteht.

7. Vorrichtung nach einem oder mehreren der vorhergehenden Ansprüche, dadurch gekennzeichnet, daß das elastische Lagerelement (1) ein zwischen einer unteren Lagerplatte (24) und der Grundplatte (16) angeordnetes Paßstück (25) aufweist.

8. Vorrichtung nach einem oder mehreren der vorhergehenden Ansprüche, dadurch gekennzeichnet, daß das elastische Lagerelement (1) ein Ölabweisblech (29) an einer oberen Lagerplatte (26) aufweist.

## Claims

1. Device for supporting combustion engines, in particular on ships, in such a way as to isolate them from vibration via flexible bearing elements (1) arranged between the engine and its place of mounting, with a stop assembly (2) for vertical and horizontal movements (4,4',5) comprising retaining elements (7,8) arranged between fixed stops (9,10,20) subject to a defined clearance (18,19,27), whereby, acting independently of flexible bearing element (1), stop assembly (2) is linked with the latter and retaining elements (7,8) are secured to a foot of the engine (13) via a support structure (6) and held between stops (9,10,20) so as to be capable of moving with flexible bearing element (1), characterised in that the retaining element has two parts (7,8), whereby the second part (7) is located in the plane of foot of engine (13) and comprises a securing bar (11) aligned in a horizontal plane and overlapping foot of engine (13) as well as a vertical securing bar (12).

2. Device according to Claim 1, characterised in that retaining elements (7,8) comprise two cylindrical sleeves joined to one another by way of a continuous tube, said sleeves being held vertically above one another and arranged parallel to flexible bearing element (1).

3. Device according to one or more of the preceding claims, characterised in that the first retaining element (8) is arranged within a fixed bush (17) constituting stop (10), subject to a radial motion clearance (18) and in axially movable manner.

4. Device according to Claim 3, characterised in that bush (17) has on its inner surface facing retaining element (8) a flexible layer (28).

5. Device according to one or more of the preceding claims, characterised in that the end face of second retaining element (7) faces a fixed stop disc (9) secured by means of a stay bolt (22) connected with base plate (16) and passing through the two cylindrical sleeves.

6. Device according to one or more of the preceding claims, characterised in that first retaining element (8) is held at an axial distance from base plate (16) which forms a stop (20) and is opposite an end face (21) of retaining element (8).

7. Device according to one or more of the preceding claims, characterised in that flexible bearing element (1) has a fitting part (25) arranged between a lower bearing plate (24) and base plate (16).

8. Device according to one or more of the preceding claims, characterised in that flexible bearing element (1) has a sheet-type oil baffle (29) on an upper bearing plate (26).

## Revendications

1. Dispositif pour supporter les moteurs à combustion en arrêtant les vibrations, en particulier sur les navires, au moyen d'éléments de support élastiques (1) disposés entre le moteur et son point d'appui avec un dispositif de butée (2) pour les déplacements verticaux et horizontaux (4, 4', 5), qui comprend des éléments de maintien (7, 8) disposés entre des butées fixes (9, 10, 20) avec un intervalle de déplacement défini (18, 19, 27) dans lequel le dispositif de butée (2) est assemblé à l'élément de support élastique (1) de manière fonctionnellement indépendante de celui-ci, et les éléments de maintien (7, 8) sont fixés par un châssis (6) à un pied de moteur (13) et sont maintenus de manière à pouvoir se déplacer entre les butées (9, 10, 20) avec l'élément de support élastique (1), caractérisé en ce que l'élément de maintien comprend deux parties (7, 8), la deuxième partie (7) étant située dans le plan du pied du moteur (13) et comprenant un bras de fixation (11) recouvrant le pied de moteur (13) et orienté dans un plan horizontal ainsi qu'un bras de fixation vertical (12).

2. Dispositif selon la revendication 1, caractérisé en ce que les éléments de maintien (7, 8) comprennent deux douilles cylindriques assemblées l'une à l'autre pour former un tube continu, celles-ci étant maintenues verticalement l'une au-dessus de l'autre et avec une disposition parallèle à l'élément de support (1).

3. Dispositif selon une ou plusieurs des revendications précédentes, caractérisé en ce que le premier élément de maintien (8) est disposé de manière à pouvoir se déplacer axialement dans une buselure fixe (17) formant la butée (10) avec un intervalle de déplacement radial (18).

4. Dispositif selon la revendication 3, caractérisé en ce que la buselure (17) présente une couche élastique (28) à sa face intérieure tournée vers l'élément de maintien (8).

5. Dispositif selon une ou plusieurs des revendications précédentes, caractérisé en ce que le deuxième element de maintien (7) est opposé par sa surface frontale à une rondelle de butée fixe (9) qui est fixée à un goujon (22) assemblé à la plaque de base (16) et traversant les deux douilles cylindriques.

6. Dispositif selon une ou plusieurs des revendications précédentes, caractérisé en ce que le premier élément de maintien (8) est maintenu à une certaine distance axiale par rapport à la plaque de base (16) qui forme la butée (20) et est opposé à une surface frontale (21) de l'élément de maintien (8).

7. Dispositif selon une ou plusieurs des revendications précédentes, caractérisé en ce que l'élément de support élastique (1) présente une pièce de réglage (25) disposée entre la plaque de support inférieure (24) et la plaque de base (16).

8. Dispositif selon une ou plusieurs des revendications précédentes, caractérisé en ce que l'élément de support élastique (1) présente une tôle de déviation d'huile (29) sur une plaque de support supérieure (26).
